Europäisches Patentamt

European Patent Office

Office européen des brevets

(19)

(11) **EP 1 367 817 A1**

(12) **DEMANDE DE BREVET EUROPEEN**

(43) Date de publication:
**03.12.2003 Bulletin 2003/49**

(51) Int Cl.$^7$: **H04N 3/15**

(21) Numéro de dépôt: **03364006.1**

(22) Date de dépôt: **06.05.2003**

| | |
|---|---|
| (84) Etats contractants désignés:<br>**AT BE BG CH CY CZ DE DK EE ES FI FR GB GR HU IE IT LI LU MC NL PT RO SE SI SK TR**<br>Etats d'extension désignés:<br>**AL LT LV MK** | (72) Inventeur: **Simony, Laurent, Cabinet Ballot**<br>**56100 Lorient (FR)** |
| (30) Priorité: **17.05.2002 FR 0206068** | (74) Mandataire: **Bentz, Jean-Paul**<br>**Cabinet Ballot**<br>**4 rue du Général Hoche**<br>**BP 855**<br>**56100 Lorient (FR)** |
| (71) Demandeur: **STMicroelectronics S.A.**<br>**92120 Montrouge (FR)** | |

(54) **Pixel actif CMOS à bruit réduit**

(57)    L'invention concerne un pixel actif CMOS à bruit réduit pour capteur d'image. Ce pixel comporte un élément photosensible (PD), un élément capacitif de rétroaction (CF) de capacité $C_F$, et quatre transistors à savoir un premier transistor (M1), deux transistors de réinitialisation (M3,M4) et un transistor de sélection du pixel (M2). Ces composants sont agencés et commandés de telle sorte que le premier transistor (M1) est monté en amplificateur pendant la phase de réinitialisation du pixel et en suiveur pendant la phase de lecture. Selon l'invention, les transistors de réinitialisation (M3,M4) sont montés en parallèle pour que l'un (M4) compense les effets négatifs de l'autre (M3) sur le noeud commun aux deux transistors.

**FIG.6**

**EP 1 367 817 A1**

## Description

L'invention est du domaine des capteurs d'images avec pixels actifs CMOS. Elle concerne plus particulièrement un pixel actif CMOS à bruit réduit.

Actuellement, la principale limitation des capteurs d'image avec pixels actifs CMOS est la présence d'un bruit de réinitialisation dans les signaux électriques produits par les pixels du capteur. Ce bruit de réinitialisation est gênant car il est prépondérant par rapport aux autres bruits dans la chaîne analogique d'acquisition du signal.

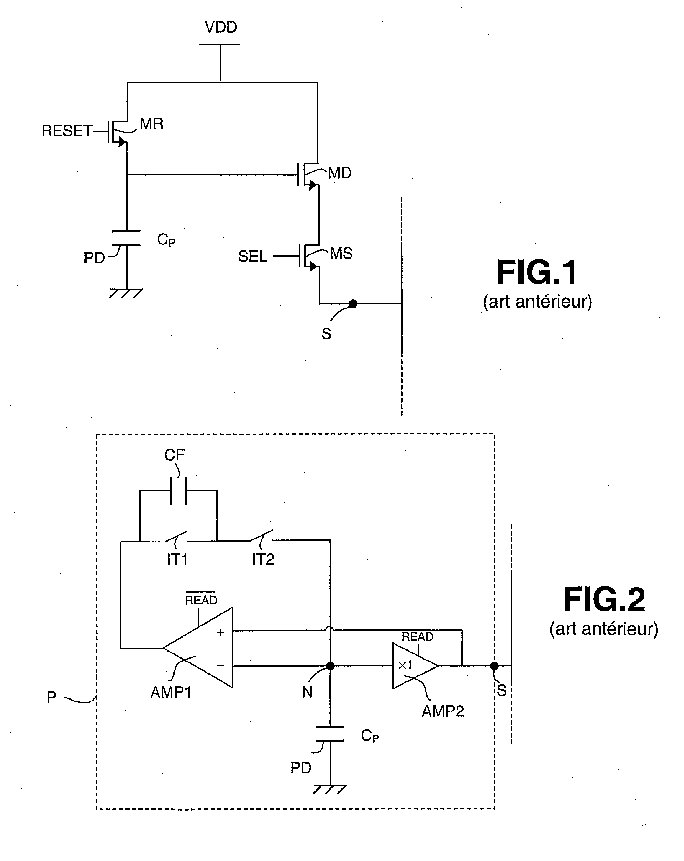

Un pixel actif CMOS classique comporte essentiellement un élément photosensible, tel qu'une photodiode, associé à trois transistors, un transistor de sélection pour sélectionner le pixel, un transistor pour réinitialiser la charge électrique de l'élément photosensible et un transistor de lecture pour délivrer un signal représentatif de la charge électrique de la photodiode avant et après réinitialisation du pixel. La structure d'un tel pixel actif CMOS est montrée à la figure 1. L'élément photosensible, noté PD, y est représenté par sa capacité $C_P$. Un transistor de réinitialisation MR est connecté entre une borne d'alimentation VDD et l'élément photosensible. Ce transistor est relié à l'élément photosensible en un point appelé noeud photosensible. Ce noeud photosensible est par ailleurs relié à la grille d'un transistor de lecture MD. Le drain du transistor MD est connecté à la borne d'alimentation VDD et sa source est connectée au drain d'un transistor de sélection MS. Enfin, le drain du transistor MS est connecté à une borne de sortie S du pixel. Pour sélectionner ce pixel, un signal SEL est appliqué sur la grille du transistor MS.

Un tel pixel actif CMOS fonctionne de la manière suivante : pendant une phase de réinitialisation (signal RESET actif), le potentiel de l'élément photosensible est réinitialisé à une valeur fixe V0. Puis, sous l'effet d'un signal lumineux, la charge électrique de l'élément photosensible est modifiée et la tension à ses bornes passe alors de V0 à V0-Vsignal, Vsignal étant représentatif du nombre de photons incidents reçus par le pixel. Un procédé à double échantillonnage corrélé dit CDS (pour Correlated Double Sampling en langue anglaise) est alors utilisé pour lire la valeur Vsignal. Ce procédé consiste à lire le signal à la sortie du pixel avant et après réinitialisation du pixel puis à calculer la différence entre les deux signaux pour en déduire Vsignal.

Cette structure de pixel présente quatre inconvénients majeurs. Un premier inconvénient est que la phase de réinitialisation engendre un bruit de réinitialisation dans l'élément photosensible. Ce bruit est d'autant plus élevé que la capacité de la photodiode est faible. La valeur efficace de ce bruit est donnée par la formule suivante

$$B = \sqrt{\frac{kT}{C_P}}$$

où k est la constante de Boltzmann, T est la température absolue et $C_P$ est la capacité de la photodiode. Avec une capacité $C_P$ de 3 femtofarads, la valeur efficace du bruit est de 1,2 mV à une température de 300 Kelvins.

Un deuxième inconvénient est la présence d'un bruit d'alimentation. En effet, il existe un couplage direct entre la source d'alimentation en tension VDD et le noeud photosensible par l'intermédiaire de la capacité drain-grille du transistor de lecture. Un bruit d'alimentation vient alors s'ajouter au bruit de réinitialisation dans la photodiode.

Par ailleurs, l'utilisation d'un transistor MOS en tant qu'interrupteur pour réaliser la réinitialisation du pixel produit une injection de charges électriques dans la photodiode : une partie des charges électriques formant le canal du transistor MOS se retrouvent, après passage du transistor dans sa zone de blocage, dans la capacité de la photodiode. La variation de tension qui en résulte est d'autant plus élevée que la capacité de la photodiode est faible. Ce phénomène réduit l'excursion en tension du signal de sortie d'une fraction pouvant être relativement importante.

Enfin, un problème de traînage apparaît également lorsque la phase de réinitialisation ne parvient pas à effacer totalement l'information acquise dans la photodiode lors de la précédente phase de lecture. Le traînage se manifeste sur un écran par une rémanence de l'image : l'image lue contient alors un résidu de l'image précédente. Ce problème apparaît quand on utilise une technique de réinitialisation à bande passante limitée.

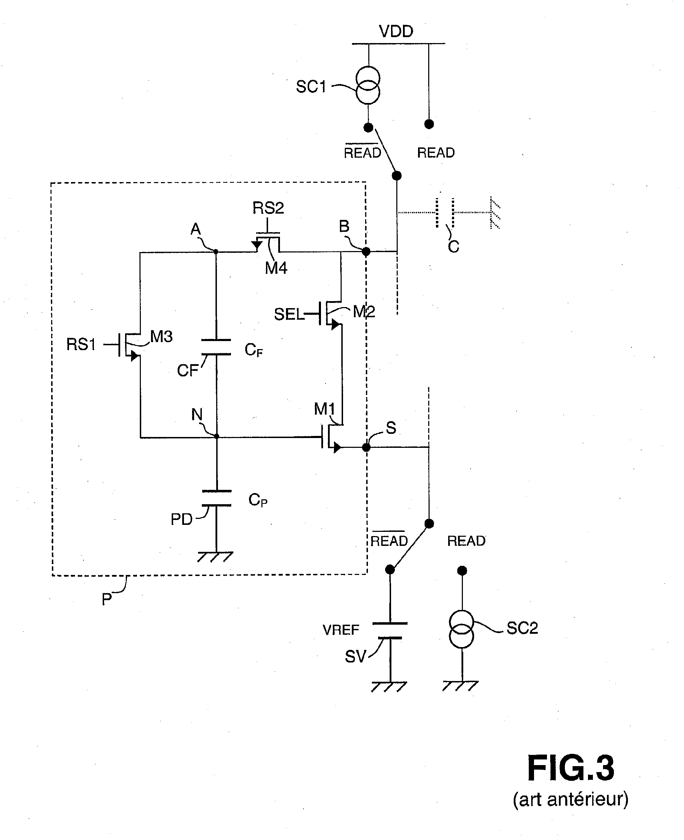

Pour remédier à tout ou partie de ces problèmes, une nouvelle structure de pixel actif CMOS a été développée. Cette structure est divulguée dans la demande de brevet français, dont le numéro de dépôt est 01/07349, déposée le 28 mai 2001 au nom du présent demandeur. Cette nouvelle structure de pixel actif CMOS est illustrée par les figures 2 et 3.

En référence à la figure 2, le pixel actif CMOS, noté P, comprend une photodiode PD de capacité $C_P$, un amplificateur AMP1 actif pendant la phase de réinitialisation (signal READ inactif), un amplificateur suiveur AMP2 actif pendant la phase de lecture (signal READ actif), deux interrupteurs IT1 et IT2 montés en série entre la sortie et l'entrée inverseuse de l'amplificateur AMP1, et un élément capacitif CF de capacité $C_F$ monté en parallèle avec l'interrupteur IT1. La photodiode PD est connectée entre un noeud photosensible N et la masse. L'entrée non inverseuse de l'amplificateur AMP1 est connectée à une borne de sortie S du pixel qui reçoit une tension de référence pendant la phase de réinitialisation du pixel. L'amplificateur suiveur AMP2 actif pendant la phase de lecture est placé entre le noeud photosensible N et la borne de sortie S du pixel.

Un schéma plus détaillé de ce pixel actif CMOS est représenté à la figure 3. Un transistor M1 et un transistor de sélection de ligne M2 sont utilisés pour former l'amplificateur AMP1 pendant la phase de réinitialisation. Ces transistors forment également l'amplificateur suiveur AMP2 pendant la phase de lecture. Des transistors M3 et M4 sont également utilisés pour former les interrupteurs IT1 et IT2.

Ces composants sont connectés entre eux de la manière suivante. Le transistor M1 a sa grille connectée au noeud photosensible N et sa source connectée à la borne de sortie S du pixel. La borne de sortie S délivre un signal représentatif de la charge électrique de la photodiode pendant la phase de lecture du pixel. Le transistor de sélection M2 est monté en cascode avec le transistor M1, c'est-à-dire que sa source est reliée au drain du transistor M1. Son drain est connecté à un noeud B commun à tous les pixels de la colonne à laquelle le pixel considéré est raccordé et sa grille reçoit un signal de sélection SEL pour sélectionner le pixel. Le transistor M3, formant l'interrupteur IT1, est connecté entre le noeud photosensible N et un point A du pixel. Ce transistor est commandé par un signal de réinitialisation RS1 actif pendant une première période $\phi_1$ de la phase de réinitialisation du pixel. La phase de réinitialisation du pixel est en effet composée de trois périodes $\phi_1$, $\phi_2$ et $\phi_3$ consécutives.

Le transistor M4 est connecté entre le noeud B et le noeud A. Ce transistor est commandé par un signal de réinitialisation RS2 actif pendant les périodes $\phi_1$ et $\phi_2$ de la phase de réinitialisation. L'élément capacitif CF est connecté en parallèle avec le transistor M3 entre le noeud A et le noeud N. Enfin, la somme des contributions capacitives de chaque pixel de la colonne du pixel considéré entre son point respectif B et la masse est représentée sur le schéma par une capacité C, connectée entre le noeud B et la masse.

Des moyens sont prévus dans le capteur d'image contenant le pixel pour polariser et alimenter le pixel pendant les différentes phases de fonctionnement du pixel. Ces moyens sont avantageusement communs à tous les pixels d'une même colonne dans le capteur d'image, voire à tous les pixels du capteur d'image selon le cas. On prévoit donc une source de tension VDD et une source de courant SC1 pour alimenter en énergie le noeud B du pixel respectivement pendant la phase de lecture et la phase de réinitialisation du pixel. On prévoit également une deuxième source de courant SC2 et une source de tension SV présentant un bruit négligeable pour imposer à la borne de sortie S du pixel respectivement un courant pendant la phase de lecture et une tension de référence VREF pendant la phase de réinitialisation.

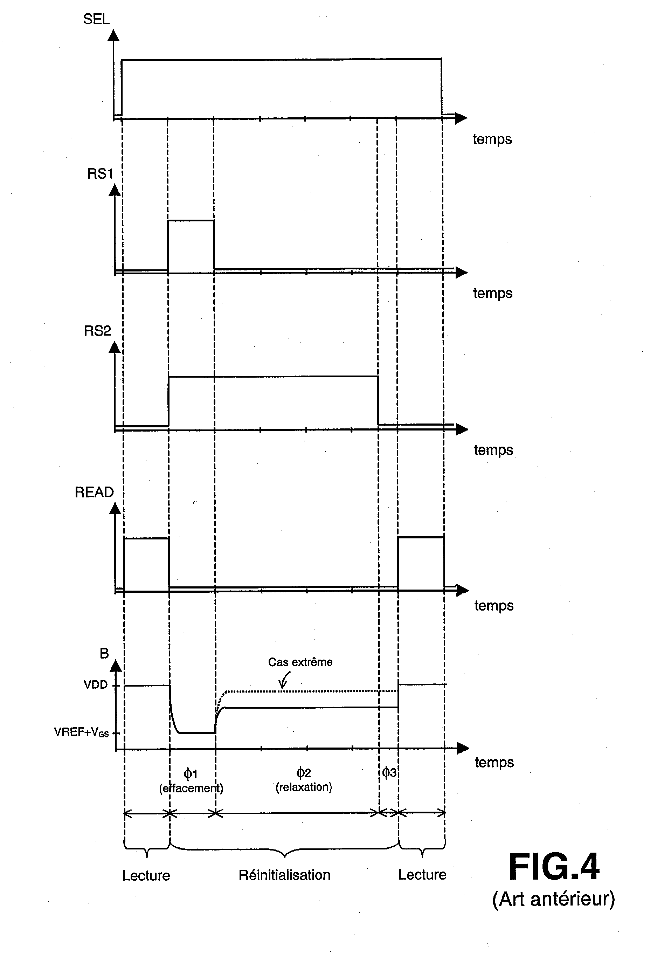

Le fonctionnement de ce pixel actif CMOS est illustré par les chronogrammes des signaux de commande SEL, RS1, RS2 et READ de la figure 4. La lecture de l'information contenue dans la photodiode après modification de sa charge électrique sous l'effet d'un signal lumineux nécessite une première phase de lecture pour acquérir un signal représentatif de l'illumination du pixel par le signal lumineux, une phase de réinitialisation de la charge électrique du pixel, et une deuxième phase de lecture pour acquérir un signal représentatif de la charge électrique initiale du pixel. La différence entre ces deux signaux donne un signal représentatif de la variation de la charge électrique due aux photons incidents du signal lumineux.

Pendant lesdites première et seconde phases de lecture du pixel, le signal de commande READ et le signal de sélection SEL sont actifs alors que les signaux RS1 et RS2 sont inactifs. Dans le cas présent (utilisation de transistors MOS à canal N), un signal est dit actif s'il présente un niveau de tension haut et inactif s'il présente un niveau de tension bas.

Pendant la première phase de lecture, le noeud B est alimenté par la tension d'alimentation VDD et un courant est imposé par la source de courant SC2 sur la borne de sortie S du pixel. Les transistors M3 et M4 sont bloqués. Le transistor M1, alors monté en suiveur, est alimenté à travers le transistor M2. Un signal de tension représentatif de la charge électrique de la photodiode est alors disponible sur la borne de sortie S du pixel.

Ensuite, pendant les trois périodes $\phi_1$, $\phi_2$ et $\phi_3$ de la phase de réinitialisation, le signal READ est inactif.

Pendant la période $\phi_1$ dite d'effacement (ou "hard reset" dans la terminologie anglo-saxonne), les signaux de commande SEL, RS1 et RS2 sont actifs. Les transistors M2, M3 et M4 sont donc conducteurs. Le transistor M1 est monté en amplificateur et son drain est connecté à sa grille par l'intermédiaire du transistor M2.

Le pixel est alimenté par le courant provenant de la source de courant SC1 et la tension de référence VREF est imposée sur la borne de sortie S du pixel. Le courant fourni par la source de courant SC1 traverse les transistors M1 et M2 et est absorbé par la source de tension SV. Un potentiel VREF+$V_{GS}$(M1) est imposé sur le noeud photosensible N, $V_{GS}$(M1) représentant la tension grille-source du transistor M1. La période $\phi_1$ a pour but d'effacer l'information contenue initialement dans le pixel en imposant une tension fixe aux bornes de la photodiode.

Pendant la période $\phi_2$ dite de relaxation, le signal de commande RS1 est inactif. Le transistor M3 est alors bloqué. La tension de bruit

$$\sqrt{\frac{kT}{C_F}}$$

est échantillonnée sur l'élément capacitif CF. Le transistor M1 est contre-réactionné par le diviseur capacitif formé de l'élément capacitif CF et de la capacité de la photodiode PD. Le transistor M1 fonctionne alors en amplificateur (amplificateur AMP1). Les transistors M1 et M2 étant montés en cascode, on obtient alors un gain statique élevé pour le transistor M1. Le gain de la boucle formée par les transistors M1 et M2 et le diviseur capacitif est élevé malgré le diviseur capacitif. La phase $\phi_2$ doit être maintenue jusqu'à ce que l'amplificateur AMP1 atteigne un état d'équilibre.

Pendant la période $\phi_3$, le signal de commande RS2 est inactif. Le transistor M4 est donc bloqué. Ce passage à un niveau bas est opéré très rapidement par rapport à la constante de temps de l'amplificateur AMP1.

Cette structure de pixel actif CMOS permet d'obtenir des résultats satisfaisants en termes de bruit de réinitialisation, de bruit d'alimentation, d'injection de charges électriques dans la photodiode et de traînage comme cela a été exposé de façon très complète dans la demande de brevet français n°01/07349 citée précédemment.

Cependant, la capacité de couplage grille-drain du transistor M3 produit une variation de tension positive au noeud B (correspondant à la sortie de l'amplificateur AMP1) lors de la période $\phi_2$ de la phase de réinitialisation. Cette variation est acceptable tant que l'amplificateur AMP1 ne sature pas et n'écrête pas le signal.

Selon la technologie de gravure employée, cette capacité de couplage peut être très élevée. Dans un cas extrême, on retrouve alors à la sortie de l'amplificateur une tension très élevée, qui est écrêtée à la valeur d'alimentation VDD, à une tension de déchet près. L'évolution du potentiel au noeud B dans ce cas est montrée à la figure 4. Comme la sortie de l'amplificateur est écrêtée, celui-ci n'amplifie plus de manière linéaire et l'effet recherché, à savoir principalement la correction du bruit de. réinitialisation, n'est plus atteint.

Ce couplage intervient en fait de manière négative lors du front descendant du signal de commande RS1. Deux phénomènes se produisent alors :

- le potentiel sur le noeud photosensible N baisse instantanément; et
- une partie des charges électriques constituant le canal du transistor M3 est injectée dans le noeud N, ce qui contribue à faire baisser encore plus le potentiel du noeud N.

Le potentiel du noeud N commandant la grille du transistor M1 diminuant, il en résulte que le potentiel au noeud B augmente. Cette augmentation du potentiel à la sortie de l'amplificateur est d'autant plus forte que la capacité $C_F$ est faible, ce qui correspond aux conditions de réalisation du pixel.

Le but de l'invention est de réaliser un pixel actif CMOS amélioré qui soit insensible à ce problème de couplage capacitif du transistor M3.

Selon l'invention, on propose de compenser les effets du front descendant du signal de commande RS1 du transistor M3 en appliquant un front montant de même amplitude sur un autre transistor de mêmes dimensions dans le pixel.

Etant donné qu'il n'est pas souhaitable d'ajouter un autre transistor dans le pixel pour mettre en oeuvre cette compensation, on prévoit selon l'invention de modifier la structure et le fonctionnement du pixel décrit précédemment pour que la compensation soit réalisée par le transistor M4 et le signal de commande RS2.

Selon l'invention, on propose donc une structure de pixel actif CMOS dans laquelle les transistors MOS M3 et M4 sont arrangés dans une configuration de type parallèle plutôt que série.

La présente invention a donc pour objet un pixel actif CMOS pour capteur d'image comportant un élément photosensible, tel qu'une photodiode, dont la charge électrique est réinitialisée pendant une phase de réinitialisation et lue pendant une phase de lecture, ledit élément photosensible étant connecté entre un noeud photosensible et la masse, caractérisé en ce qu'il comporte en outre:

- un premier amplificateur actif pendant ladite phase de réinitialisation et dont les entrées inverseuse et non inverseuse sont respectivement connectées au noeud photosensible et à une source de tension de référence,
- un premier interrupteur connecté entre l'entrée inverseuse et la sortie dudit premier amplificateur, commandé par un premier signal de commande actif pendant une première période de la phase de réinitialisation et inactif pendant des deuxième et troisième périodes de la phase de réinitialisation et pendant la phase de lecture,
- un élément capacitif connecté entre la sortie dudit premier amplificateur et un noeud intermédiaire du pixel,
- un deuxième interrupteur connecté entre le noeud photosensible et le noeud intermédiaire du pixel, commandé par un deuxième signal de commande actif pendant le début de la première période de la phase de réinitialisation et pendant la totalité de la deuxième période de la phase de réinitialisation et inactif pendant le reste de la phase de réinitialisation et pendant la phase de lecture, et
- un second amplificateur monté en suiveur, actif pendant la phase de lecture, dont l'entrée est connectée au noeud photosensible et la sortie délivre un signal représentatif de la charge électrique dudit élément photosensible pendant ladite phase de lecture.

Lesdits premier et second amplificateurs consistent en un premier transistor dont la grille est connectée au noeud photosensible et la source est reliée à ladite source de tension de référence pendant ladite phase de réinitialisation et à une première source de courant pendant ladite phase de lecture, et un transistor de sélection commandé par un signal de sélection actif pendant lesdites phases de réinitialisation et de lecture dudit pixel, dont la source est connectée au drain du premier transistor et dont le drain est connecté à une seconde source de courant pendant ladite phase de réinitialisation et à une source de tension d'alimentation pendant ladite phase de lecture, la source dudit premier transistor délivrant ledit signal représentatif de la charge électrique dudit élément photosensible pendant ladite phase de lecture.

L'invention concerne également un procédé de réinitialisation d'un pixel actif CMOS comportant au moins un élément photosensible de capacité $C_P$ ayant un noeud photosensible, un amplificateur ayant une entrée inverseuse connectée audit noeud photosensible, une entrée non inverseuse et une sortie, un premier interrupteur initialement dans un état ouvert connecté entre l'entrée inverseuse et la sortie dudit amplificateur, un élément capacitif de capacité $C_F$ connecté entre la sortie dudit amplificateur et un noeud intermédiaire du pixel, et un second interrupteur initialement dans un état ouvert connecté entre le noeud photosensible et le noeud intermédiaire, ledit procédé étant caractérisé en ce qu'il comprend les étapes suivantes:

- appliquer, pendant une première période, une tension de référence sur l'entrée non inverseuse dudit amplificateur, relier la sortie dudit amplificateur à son entrée inverseuse en fermant ledit premier interrupteur pendant ladite première période, et appliquer brièvement ladite tension de référence sur les deux bornes dudit élément capacitif en fermant momentanément ledit second interrupteur au début ladite première période pour réinitialiser la charge de celui-ci,
- contre-réactionner, pendant une deuxième période dite de relaxation, la sortie dudit amplificateur sur son entrée inverseuse par ledit élément capacitif de rétroaction en fermant ledit second interrupteur jusqu'à atteindre un état d'équilibre, ledit premier interrupteur étant ouvert; et
- ouvrir, pendant un troisième temps, ledit second interrupteur.

Lorsque commence la deuxième période (à l'ouverture du premier interrupteur), il se produit une variation positive de la tension à la sortie de l'amplificateur. La fermeture du second interrupteur a pour but de compenser cette variation positive. Cette fermeture de l'interrupteur est opérée avant que l'amplificateur n'arrive à saturation et après que le premier interrupteur a atteint un état complètement ouvert. C'est pourquoi la commande de fermeture du second interrupteur n'intervient, de préférence, pas immédiatement après la commande d'ouverture du premier interrupteur mais quelques nanosecondes après.

Par ailleurs, en fin de période de relaxation, le transistor formant le deuxième interrupteur est mis en faible inversion juste avant son blocage, pour diminuer encore le bruit de réinitialisation produit par celui-ci.

D'autres caractéristiques et avantages de l'invention apparaîtront à la lecture de la description détaillée qui suit et qui est faite en référence aux dessins annexés, parmi lesquels :

- la figure 1, déjà décrite, représente un pixel actif CMOS classique à 3 transistors,
- la figure 2 représente un schéma d'un autre pixel actif CMOS de l'art antérieur,
- la figure 3 représente un schéma plus détaillé du pixel actif CMOS de la figure 2;
- la figure 4 représente les chronogrammes des signaux de commande du pixel actif CMOS de la figure 3;
- la figure 5 représente un schéma d'un pixel actif CMOS selon l'invention;
- la figure 6 représente un schéma plus détaillé du pixel actif CMOS de la figure 5; et
- la figure 7 représente les chronogrammes des signaux de commande et du potentiel au noeud B du pixel actif CMOS de la figure 6.

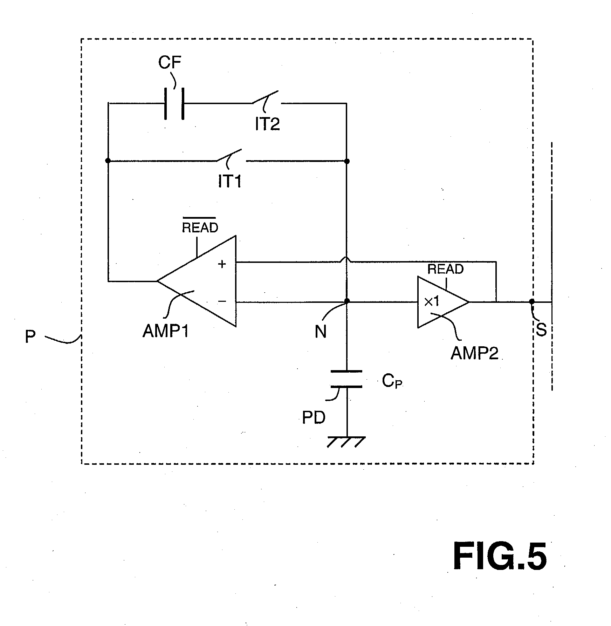

La structure générale d'un pixel actif CMOS selon l'invention est montrée à la figure 5. La structure de pixel se différencie de celle exposée à la figure 2 en ce que l'interrupteur IT2 est monté en série avec l'élément capacitif CF entre l'entrée inverseuse et la sortie de l'amplificateur AMP1, et en ce que l'interrupteur IT1 est connecté entre l'entrée inverseuse et la sortie de l'amplificateur AMP1.

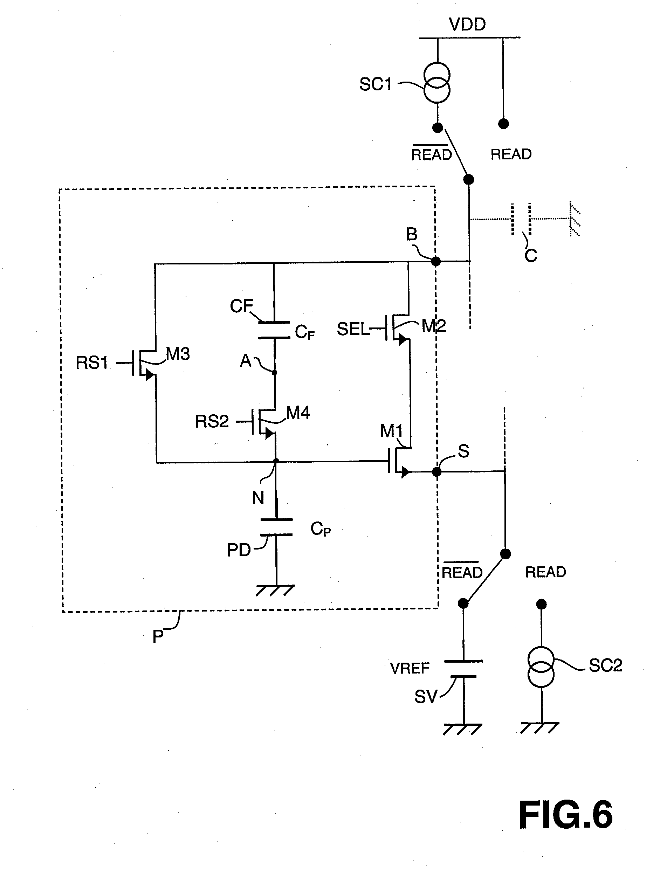

Un schéma plus détaillé du pixel est représenté à la figure 6, à comparer avec celui de la figure 3. Par rapport à la figure 3, la position de l'élément capacitif CF et des transistors M3 et M4 formant les interrupteurs IT1 et IT2 est modifiée. Selon l'invention, le transistor M3 a son drain connecté au noeud B et sa source connectée au noeud photosensible N. D'autre part, le transistor M4 a sa source connectée au noeud photosensible N et son drain connecté au noeud A et l'élément capacitif CF est monté entre le noeud A et le noeud B. Le reste du schéma est inchangé par rapport à la figure 3. Par conséquent, tout ce qui a été décrit dans le préambule de la présente demande sur la structure du pixel actif CMOS, à l'exception de la position des transistors M3, M4 et de l'élément capacitif CF, vaut pour la présente invention.

S'agissant des signaux de commande SEL, RS1, RS2 et READ du pixel, seul le signal de commande RS2 appliqué sur la grille du transistor M4 est modifié par rapport aux chronogrammes de la figure 4. Ce signal est actif au

début la période $\phi_1$ d'effacement pour réinitialiser le potentiel sur l'élément capacitif CF et pendant la majeure partie de la période $\phi_2$ de relaxation.

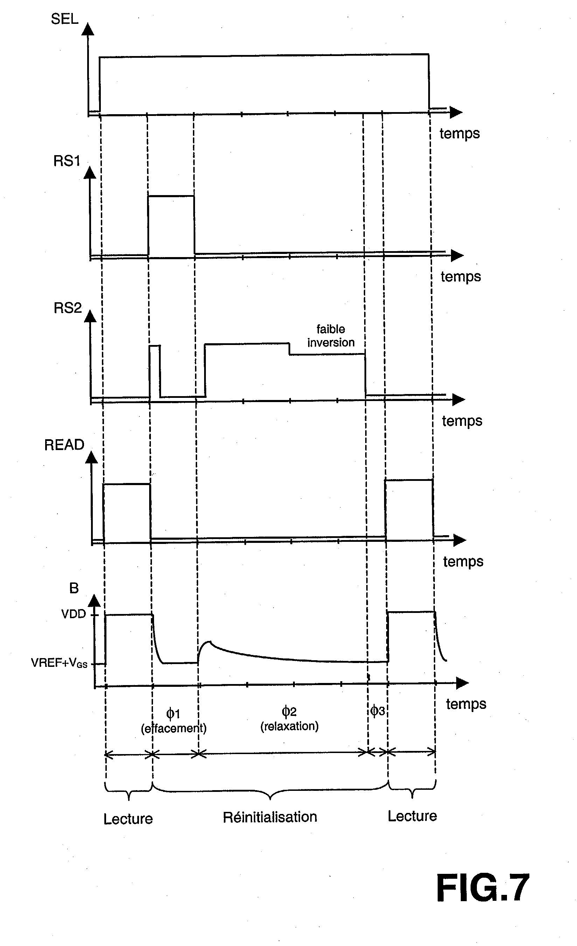

Le fonctionnement de ce pixel actif CMOS est illustré par les chronogrammes des signaux de commande SEL, RS1, RS2 et READ de la figure 7. Comme décrit dans le préambule de la présente demande, le procédé de lecture de l'état du pixel comprend deux phases de lecture séparées par une phase de réinitialisation. La première phase de lecture a pour but de produire un signal représentatif de la charge électrique de la photodiode après illumination du pixel par un signal lumineux; la phase de réinitialisation a pour but de réinitialiser la charge électrique de la photodiode et la deuxième phase de lecture a pour but de produire un signal représentatif de la charge électrique initiale du pixel. La différence entre les deux charges lues donne la charge électrique due aux photons incidents du signal lumineux.

Pendant lesdites première et seconde phases de lecture du pixel, le signal de commande READ et le signal de sélection SEL sont actifs alors que les signaux RS1 et RS2 sont inactifs. Le pixel actif fonctionne alors comme le pixel de la figure 3.

Pendant la phase de réinitialisation, le signal READ est inactif et le signal SEL reste actif.

## Période d'effacement ($\phi_1$)

Les signaux RS1 et RS2 sont actifs au début de la phase $\phi_1$ pour réinitialiser tous les potentiels du pixel. Puis rapidement, le signal RS2 redevient inactif. Les transistors M2 et M3 sont conducteurs. Le transistor M1 est monté en amplificateur et le drain du transistor M2 est connecté à la grille du transistor M1. Un potentiel fixe VREF+$V_{GS}$(M1) est imposé sur le noeud photosensible N pour effacer l'information contenue dans la photodiode.

## Période de relaxation ($\phi_2$)

La période de relaxation $\phi_2$ débute au front descendant du signal de commande RS1. Au début de cette période, le signal de commande RS2 reste inactif. Il n'y a donc pas de capacité de rétroaction et la capacité de couplage du transistor M3 associé au front descendant du signal RS1 provoque une montée rapide du potentiel au noeud B. Mais, avant que le potentiel au noeud B n'atteigne sa valeur d'équilibre, on provoque un front montant du signal RS2. Il en résulte :

- la présence d'une capacité de rétroaction $C_F$ nécessaire pour cette phase,
- la montée du potentiel au noeud B due au front descendant du signal RS1 sur la grille du transistor M3 est compensée par le front montant du signal RS2 appliqué sur la grille du transistor M4.

La première condition importante pour que cette compensation soit efficace est d'attendre le blocage complet du transistor M3 pour mettre en conduction le transistor M4. Le transistor M4 permet alors de compenser exactement les charges électriques injectées par le transistor M3 sur le noeud commun aux deux transistors. C'est pourquoi la commande de fermeture du transistor M4 n'intervient pas immédiatement après la commande d'ouverture du transistor M3 mais quelques nanosecondes après.

L'autre condition est que les deux transistors M3 et M4 doivent être appariés pour que la compensation soit de même amplitude que la variation de tension introduite par le couplage capacitif du transistor M3 au noeud B, mais de signe opposé. Cela signifie que les transistors M3 et M4 sont de mêmes dimensions, de même géométrie et de même orientation dans le circuit intégré formant ledit pixel actif CMOS.

Après le front montant du signal RS2, le potentiel au noeud B revient à un niveau voisin de celui qu'il a lorsque le signal RS1 est actif, et l'amplificateur AMP1 peut donc fonctionner dans sa zone linéaire pendant la période de relaxation $\phi_2$.

S'agissant du bruit de réinitialisation, le transistor M3 est bloqué pendant la période de relaxation $\phi_2$. La tension de bruit

$$\sqrt{\frac{kT}{C_F}}$$

est échantillonnée sur l'élément capacitif CF. Le transistor M1 est contre-réactionné par le diviseur capacitif formé de l'élément capacitif CF et de la capacité de la photodiode PD. Le transistor M1 fonctionne alors en amplificateur (amplificateur AMP1). Les transistors M1 et M2 étant montés en cascode, on obtient alors un gain statique élevé pour l'amplificateur.

Le gain statique du transistor M1 s'exprime sous la forme suivante :

$$G_0 = gm_1 \times R_0$$

Où $gm_1$ est la transconductance du transistor M1 et $R_0$ est son impédance de charge sur la borne B.

Le rapport $C_F/C_P$ étant très inférieur à 1, le gain de la boucle formée par les transistors M1 et M2 et le diviseur capacitif est très supérieur à 10 et vaut :

$$G_b = G_0 \times \frac{C_F}{C_F + C_P} >> 1$$

La valeur du gain de boucle $G_b$ reste élevée malgré le diviseur capacitif.

Le produit gain - bande passante, égal à $gm_1/C$, où C représente la capacité de charge sur le noeud B, est fixé par le choix du courant traversant le transistor M1 à savoir le courant fourni par la source de courant SC1.

La période de relaxation $\phi_2$ est maintenue jusqu'à ce que l'amplificateur AMP1 atteigne un nouvel état d'équilibre. Le gain de boucle $G_b$ élevé fait en sorte que le bruit de réinitialisation

$$\sqrt{\frac{kT}{C_F}}$$

échantillonné en contre-réaction sur l'élément capacitif se répartisse pour une fraction $\frac{-1}{G_b + 1}$ sur la photodiode, et pour une fraction $\frac{G_b}{G_b + 1}$ sur le drain du transistor M2. Il en résulte que le bruit, noté B1, introduit par l'élément capacitif CF dans la photodiode est atténué par le gain de boucle. On a alors :

$$B1 = \sqrt{\frac{\sqrt{\frac{kT}{C_F}}}{G_b + 1}} \approx \frac{\sqrt{kT}}{G_0} \times \frac{C_F + C_P}{C_F{}^{3/2}}$$

Un bruit B2 large bande est également produit par le transistor M4. Ce bruit n'est pas contre-réactionné par l'amplificateur car, au-delà du produit gain - bande passante, l'amplificateur AMP1 n'a plus de gain (<<1) et ne fonctionne donc plus en amplificateur. Sa densité spectrale est atténuée par le diviseur capacitif formé de l'élément capacitif CF et de la capacité de la photodiode. On a :

$$B2 = \frac{C_F}{C_F + C_P} \times \sqrt{\frac{kT(C_F + C_P)}{C_F C_P}} = \sqrt{\frac{kT}{C_P}} \times \sqrt{\frac{C_F}{C_F + C_P}}$$

Le bruit habituel produit par la photodiode

$$\left( \sqrt{\frac{kT}{C_P}} \right)$$

subit par conséquent une atténuation par le facteur

$$\sqrt{\frac{C_F}{C_F + C_P}} << 1.$$

Selon une caractéristique supplémentaire de l'invention, on prévoit de faire fonctionner le transistor M4 en faible inversion avant de le bloquer en fin de période $\phi_2$ afin de diminuer encore le bruit de réinitialisation dans le pixel. En effet, le transistor M4 contribue fortement à la présence de ce bruit dans le pixel. Lorsqu'un transistor MOS est utilisé en faible inversion, il est démontré que sa densité spectrale de bruit est inférieure de 3 dB à ce qu'elle serait en zone ohmique. Pour mettre le transistor M4 est faible inversion, il suffit de baisser progressivement le signal de commande RS2 appliqué sur sa grille. Quand l'état de faible inversion est atteint, le transistor M4 peut ensuite être bloqué complètement par un front descendant du signal RS2.

**Troisième période ($\phi_3$)**

Pendant la période $\phi_3$, le signal de commande RS2 est inactif et le transistor M4 est donc bloqué. Ce passage à un niveau bas doit être opéré très rapidement par rapport à la constante de temps de l'amplificateur AMP1. Le bruit B2 est alors bloqué dans la photodiode. Le bruit total se retrouvant alors dans la photodiode est la somme quadratique de B1 et B2 si le transistor M4 est en forte inversion.

$$B_{total} = \sqrt{B1^2 + B2^2}$$

soit

$$B_{total}^2 = kT\left[\frac{(C_P + C_F)^2}{G_0^2 C_F^3} + \frac{C_F}{C_P(C_F + C_P)}\right]$$

Si comme prévu, le transistor M4 est mis en faible inversion à la fin de la période de relaxation $\phi_2$, $B_{total}^2$ devient égal à :

$$B_{total}^2 = kT\left[\frac{(C_P + C_F)^2}{G_0^2 C_F^3} + \frac{1}{2}\frac{C_F}{C_P(C_F + C_P)}\right]$$

Ainsi, lorsque la valeur de la capacité de l'élément capacitif CF augmente, le bruit B1 diminue alors que le bruit B2 augmente. Il est donc possible de définir une valeur $C_F$ pour laquelle le bruit total est minimal. En pratique, la valeur minimale du bruit total est très inférieure à la valeur du bruit de réinitialisation habituel, à savoir

$$\sqrt{\frac{kT}{C_P}}.$$

Les performances de ce pixel vis à vis de l'injection de charges électriques, de la réjection de l'alimentation et du problème de traînage sont par ailleurs les suivantes.

S'agissant de l'injection de charges électriques dans l'élément photosensible, le front descendant du signal de commande RS1 (début de $\phi_2$) provoque une injection de charges dans la photodiode provenant du transistor M3. Cette injection est ensuite corrigée par le front montant du signal RS2 pendant la période de relaxation $\phi_2$. Il en résulte que le noeud photosensible est donc protégé contre une injection importante de charges électriques.

S'agissant de la réjection de la tension d'alimentation, le bruit d'alimentation est filtré par la capacité C présente sur le noeud B puis atténué par le diviseur capacitif avant d'atteindre le noeud photosensible. S'agissant du bruit injecté par le signal de sélection SEL, ce signal peut être filtré puisque ses transitions peuvent être lentes. Le drain du transistor M1 est alors découplé de l'alimentation et de ce fait la photodiode aussi.

S'agissant du mécanisme de traînage, lorsque les transistors M1, M2 et M3 sont conducteurs lors de la période d'effacement $\phi_1$, on impose sous faible impédance une tension fixe sur la photodiode, indépendante de la valeur initiale contenue dans le pixel. La constante de temps pour atteindre cet état est faible, environ 50 ns. Il en résulte que, au terme de quelques constantes de temps, la valeur initiale du pixel est totalement effacée.

Le procédé de réinitialisation décrit précédemment peut être appliqué à tout pixel actif CMOS comportant au moins un élément photosensible de capacité $C_P$ ayant un noeud photosensible N, un amplificateur AMP1 ayant une entrée inverseuse connectée audit noeud photosensible, une entrée non inverseuse et une sortie, un premier interrupteur IT1 initialement dans un état ouvert connecté entre l'entrée inverseuse et la sortie dudit amplificateur, un élément capacitif CF de capacité $C_F$ connecté entre la sortie dudit amplificateur et un noeud intermédiaire A du pixel, et un second interrupteur IT2 initialement dans un état ouvert connecté entre le noeud photosensible N et le noeud intermédiaire A. D'une manière très générale, le procédé consiste alors en les étapes suivantes:

- appliquer, pendant une première période $\phi_1$, une tension de référence VREF+$V_{GS}$(M1) sur l'entrée non inverseuse dudit amplificateur AMP1, relier la sortie dudit amplificateur à son entrée inverseuse en fermant ledit premier interrupteur IT1 pendant la période $\phi_1$, et appliquer brièvement la tension de référence VREF+$V_{GS}$(M1) sur les deux bornes de l'élément capacitif en fermant momentanément le second interrupteur IT2 au début ladite période $\phi_1$ pour réinitialiser la charge de celui-ci,
- contre-réactionner, pendant une deuxième période dite de relaxation $\phi_2$, la sortie dudit amplificateur AMP1 sur son entrée inverseuse par ledit élément capacitif de rétroaction CF en fermant ledit second interrupteur IT2 jusqu'à atteindre un état d'équilibre, ledit premier interrupteur IT1 étant ouvert; et
- ouvrir, pendant un troisième temps $\phi_3$, ledit second interrupteur IT2.

**Revendications**

1. Pixel actif CMOS pour capteur d'image comportant un élément photosensible (PD), tel qu'une photodiode, dont la charge électrique est réinitialisée pendant une phase de réinitialisation et lue pendant une phase de lecture, ledit élément photosensible (PD) étant connecté entre un noeud photosensible (N) et la masse, **caractérisé en ce qu'**il comporte en outre:

   - un premier amplificateur (AMP1) actif pendant ladite phase de réinitialisation et dont les entrées inverseuse et non inverseuse sont respectivement connectées au noeud photosensible (N) et à une source de tension de référence (SV),
   - un premier interrupteur (IT1) connecté entre l'entrée inverseuse et la sortie dudit premier amplificateur (AMP1), commandé par un premier signal de commande (RS1) actif pendant une première période ($\phi_1$) de la phase de réinitialisation et inactif pendant des deuxième et troisième périodes ($\phi_2,\phi_3$) de la phase de réinitialisation et pendant la phase de lecture,
   - un élément capacitif (CF) connecté entre la sortie (B) dudit premier amplificateur (AMP1) et un noeud intermédiaire (A) du pixel,
   - un deuxième interrupteur (IT2) connecté entre le noeud photosensible (N) et le noeud intermédiaire (A) du pixel, commandé par un deuxième signal de commande (RS2) actif pendant le début de la première période de la phase de réinitialisation ($\phi_1$) et pendant la totalité de la deuxième période de la phase de réinitialisation ($\phi_2$) et inactif pendant le reste de la phase de réinitialisation et pendant la phase de lecture, et
   - un second amplificateur (AMP2) monté en suiveur, actif pendant la phase de lecture, dont l'entrée est connectée au noeud photosensible (N) et la sortie (S) délivre un signal représentatif de la charge électrique dudit élément photosensible (PD) pendant ladite phase de lecture.

2. Pixel actif CMOS selon la revendication 1, **caractérisé en ce que** lesdits premier et second amplificateurs (AMP1,AMP2) consistent en un premier transistor (M1) dont la grille est connectée au noeud photosensible (N) et la source est reliée à ladite source de tension de référence (SV) pendant ladite phase de réinitialisation et à une première source de courant (SC2) pendant ladite phase de lecture, et un transistor de sélection (M2) commandé par un signal de sélection actif pendant lesdites phases de réinitialisation et de lecture dudit pixel, dont la source est connectée au drain du premier transistor (M1) et dont le drain est connecté à une seconde source de courant (SC1) pendant ladite phase de réinitialisation et à une source de tension d'alimentation (VDD) pendant ladite phase de lecture, la source dudit premier transistor (M1) délivrant ledit signal représentatif de la charge électrique dudit élément photosensible (PD) pendant ladite phase de lecture.

3. Pixel actif CMOS selon la revendication 1 ou 2, **caractérisé en ce que**, $C_P$ désignant la capacité de l'élément photosensible, le rapport $C_F/C_P$ est très inférieur à 1 et **en ce que** le gain du premier amplificateur (AMP1) est tel que le produit de ce gain par le rapport $C_F/(C_F+C_P)$ est supérieur à 10.

4. Pixel actif CMOS selon l'une des revendications précédentes, **caractérisé en ce que** lesdits premier et deuxième interrupteurs (IT1,IT2) sont réalisés par des transistors MOS (M3,M4) de mêmes dimensions, de même géométrie et de même orientation.

5. Procédé de réinitialisation d'un pixel actif CMOS comportant au moins un élément photosensible (PD) de capacité $C_P$ ayant un noeud photosensible, un amplificateur (AMP1) ayant une entrée inverseuse connectée audit noeud photosensible, une entrée non inverseuse et une sortie, un premier interrupteur (IT1) initialement dans un état ouvert connecté entre l'entrée inverseuse et la sortie dudit amplificateur, un élément capacitif (CF) de capacité $C_F$ connecté entre la sortie dudit amplificateur et un noeud intermédiaire (A) du pixel, et un second interrupteur (IT2) initialement dans un état ouvert connecté entre le noeud photosensible (N) et le noeud intermédiaire (A), ledit procédé étant **caractérisé en ce qu'**il comprend les étapes suivantes:

- appliquer, pendant une première période ($\phi_1$), une tension de référence (VREF+$V_{GS}$(M1)) sur l'entrée non inverseuse dudit amplificateur (AMP1), relier la sortie dudit amplificateur à son entrée inverseuse en fermant ledit premier interrupteur (IT1) pendant ladite première période ($\phi_1$), et appliquer brièvement ladite tension de référence (VREF+$V_{GS}$(M1)) sur les deux bornes dudit élément capacitif (CF) en fermant momentanément ledit second interrupteur (IT2) au début ladite première période ($\phi_1$) pour réinitialiser la charge de celui-ci,
- contre-réactionner, pendant une deuxième période dite de relaxation ($\phi_2$), la sortie dudit amplificateur (AMP1) sur son entrée inverseuse par ledit élément capacitif de rétroaction (CF) en fermant ledit second interrupteur (IT2) jusqu'à atteindre un état d'équilibre, ledit premier interrupteur (IT1) étant ouvert; et
- ouvrir, pendant un troisième temps ($\phi_3$), ledit second interrupteur (IT2).

**6.** Procédé selon la revendication 5, **caractérisé en ce que** le rapport $C_F/C_P$ est très inférieur à 1 et **en ce que** le gain de l'amplificateur est tel que le produit de ce gain par le rapport $C_F/(C_F+C_P)$ est supérieur à 10.

**7.** Procédé selon la revendication 5 ou 6, **caractérisé en ce que**, au début de la période de relaxation ($\phi_2$), ledit second interrupteur (IT2) est amené dans un état fermé lorsque ledit premier interrupteur (IT1) est dans un état complètement ouvert.

**8.** Procédé selon l'une des revendications 5 à 7, **caractérisé en ce que** lesdits premier et deuxième interrupteurs (IT1,IT2) sont réalisés par des transistors MOS (M3,M4) de mêmes dimensions, de même géométrie et de même orientation.

**9.** Procédé selon la revendication 8, **caractérisé en ce que**, en fin de période de relaxation ($\phi_2$), le transistor (M4) formant le deuxième interrupteur (IT2) est mis en faible inversion juste avant son blocage.

VDD

RESET—‖ MR

MD

PD⌐ ‖ C_P

SEL—‖ MS

S

# FIG.1
(art antérieur)

CF

IT1    IT2

$\overline{READ}$

+

AMP1

P

N

C_P

PD

READ

×1

AMP2

S

# FIG.2
(art antérieur)

**FIG.3**

(art antérieur)

FIG.4
(Art antérieur)

FIG.5

**FIG.6**

FIG.7

EP 1 367 817 A1

| | Office européen des brevets | RAPPORT DE RECHERCHE EUROPEENNE | Numéro de la demande EP 03 36 4006 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 01 22727 A (PIXEL DEVICES INTERNATIONAL IN) 29 mars 2001 (2001-03-29)<br>* page 5, ligne 25 - ligne 33 *<br>* page 6, ligne 31 - ligne 33 *<br>* page 12, ligne 22 - ligne 27; figure 1 *<br>Les passages cités sont basés sur la version corrigée de la publication internationale.<br>----- | 1,5 | H04N3/15 |
| | | | DOMAINES TECHNIQUES RECHERCHES (Int.Cl.7) |
| | | | H04N |

Le présent rapport a été établi pour toutes les revendications

| Lieu de la recherche | Date d'achèvement de la recherche | Examinateur |
|---|---|---|
| LA HAYE | 10 octobre 2003 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

17

**ANNEXE AU RAPPORT DE RECHERCHE EUROPEENNE
RELATIF A LA DEMANDE DE BREVET EUROPEEN NO.**

EP 03 36 4006

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-10-2003

| Document brevet cité au rapport de recherche | Date de publication | Membre(s) de la famille de brevet(s) | Date de publication |
|---|---|---|---|
| WO 0122727 A | 29-03-2001 | US 6424375 B1 | 23-07-2002 |
| | | EP 1222815 A1 | 17-07-2002 |
| | | JP 2003510909 T | 18-03-2003 |
| | | WO 0122727 A1 | 29-03-2001 |

EPO FORM P0460